# EUROPEAN PATENT SPECIFICATION

(11) **EP 4 207 461 B1**
(45) Date of publication and mention of the grant of the patent: **09.09.2026**
(21) Application number: 22816446.3
(22) Date of filing: 31.05.2022
(51) Int. Cl.: H01M 50/342, H01M 50/249, H01M 50/204, H01M 50/209, H01M 50/367

(54) **BATTERYPACK AND VEHICLE COMPRISING THE SAME**
BATTERIEPACK UND FAHRZEUG, DAS DIESES ENTHÄLT
BLOC-BATTERIE ET VEHICULE LE COMPRENANT

(30) Priority: 02.06.2021 KR 20210071805
(43) Date of publication of application: 05.07.2023
(73) Proprietor: LG Energy Solution, Ltd., Seoul 07335 (KR)
(72) Inventor: LEE, Tae-Kyeong, Daejeon 34122 (KR); WOO, Sung-Hoon, Daejeon 34122 (KR); KIM, Tae-Geun, Daejeon 34122 (KR); AN, Hyuk, Daejeon 34122 (KR)
(74) Representative: Plasseraud IP
(86) International application number: PCT/KR2022/007774
(87) International publication number: WO 2022/255787

(56) References cited:
- WO-A1-2020/120796
- WO-A1-2021/052037
- WO-A1-2021/088570
- JP-A- 2013 120 690
- JP-A- 2021 013 571
- KR-A- 20160 112 768
- KR-A- 20160 112 768
- KR-A- 20180 024 861
- KR-A- 20200 139 202

## Description

### TECHNICAL FIELD

The present disclosure relates to a battery pack and a vehicle comprising the same, and more particularly, to a battery pack with improved safety against fire or gas explosion and a vehicle comprising the same.

The present application claims priority to Korean Patent Application No. 10-2021-0071805 filed on June 2, 2021 in the Republic of Korea.

### BACKGROUND ART

Recently, there has been a rapid increase in the demand for portable electronic products such as laptop computers, video cameras and mobile phones, and with the extensive development of electric vehicles, accumulators for energy storage, robots and satellites, many studies are being made on high performance secondary batteries that can be repeatedly recharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

The lithium secondary battery usually uses a lithium-based oxide and a carbon material for a positive electrode active material and a negative electrode active material, respectively. Additionally, the lithium secondary battery includes an electrode assembly including a positive electrode plate and a negative electrode plate coated with the positive electrode active material and the negative electrode active material, respectively, with a separator interposed between the positive electrode plate and the negative electrode plate, and a packaging or a battery case in which the electrode assembly is hermetically received together with an electrolyte solution.

The lithium secondary batteries may be classified into can-type and pouch-type according to the shape of the battery case. The can-type secondary battery includes a metal can accommodating the electrode assembly, and the pouch-type secondary battery includes a pouch of an aluminum laminate sheet accommodating the electrode assembly.

More recently, there is a growing demand for high capacity battery packs used in electric vehicles. The high capacity battery pack includes a plurality of battery modules, each including secondary battery cells. **In** such a large-capacity battery pack mounted on a vehicle, gas explosion may occur in some battery modules while a plurality of battery modules are being electrically charged and discharged. At this time, the high-temperature gas, flame, and spark discharged from the battery module moves to another adjacent battery module, causing thermal runaway of the other battery module or a secondary gas explosion. Accordingly, the gas explosion occurring in the initial stage leads to a chain explosion, which further increases the scale and risk of an accident.

Therefore, there is a need for a method for smoothly and quickly discharging gas in order to minimize the movement of gas to other adjacent battery modules even if a gas explosion occurs in some battery modules among a plurality of battery modules.

Further prior art is described in KR 2016 0112768 A, WO 2021/052037 A1, WO 2021/088570 A1 and WO 2020/120796 A1.

### DISCLOSURE

### Technical Problem

The present disclosure is designed to solve the above-described problem, and therefore it is an object of the present disclosure to provide a battery pack with improved safety against fire or gas explosion and a vehicle comprising the same.

These and other objectives and advantages of the present disclosure can be understood by the following description, and will be apparent from the embodiments of the present disclosure. In addition, it will be readily appreciated that the objectives and advantages of the present disclosure can be realized by the means set forth in the appended claims and a combination thereof.

### Technical Solution

This object is accomplished with a battery pack comprising the features of patent claim 1.

Dependent claims are directed on features of preferred embodiments of the disclosure.

### Advantageous Effects

According to an embodiment of the present disclosure, the battery pack of the present disclosure includes a gas venting unit having a plate shape to seal the gas inlet and configured to be at least partially ruptured when the internal gas pressure of the pack housing increases to a predetermined value or above so that the gas of the accommodation space is introduced into the gas inlet. Thus, when abnormal operation such as gas explosion of at least one battery module accommodated in the battery pack occurs, or when the internal gas pressure of the pack housing increases to a predetermined value or above due to the gas discharged from the battery module, the gas venting unit may open the gas inlet to quickly discharge the gas through the gas discharge channel of the pack housing. Accordingly, the battery pack of the present disclosure may greatly improve safety.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a battery pack according to an embodiment of the present disclosure.
FIG. 2 is an exploded perspective view schematically showing the battery pack according to an embodiment of the present disclosure.
FIG. 3 is a perspective view schematically showing some components of the battery pack according to an embodiment of the present disclosure.
FIG. 4 is a partial rear view schematically showing some components of the battery pack according to an embodiment of the present disclosure.
FIG. 5 is a rear perspective view schematically showing some components of the battery pack according to an embodiment of the present disclosure.
FIGS. 6 and 7 are a left perspective view and a right perspective view schematically showing some components of the battery pack according to an embodiment of the present disclosure.
FIG. 8 is a partial perspective view schematically showing a gas venting unit and a side frame of the battery pack according to an embodiment of the present disclosure.
FIG. 9 is a rear perspective view schematically showing the gas venting unit of the battery pack according to an embodiment of the present disclosure.
FIG. 10 is a cross-sectional view schematically showing a discharge disk and a coupling plate of the gas venting unit of the battery pack according to another embodiment of the present disclosure.
FIG. 11 is a right view schematically showing a battery module of the battery pack according to an embodiment of the present disclosure.
FIG. 12 is a partial perspective view showing some components of the battery pack according to another embodiment of the present disclosure.
FIG. 13 is a perspective view schematically showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

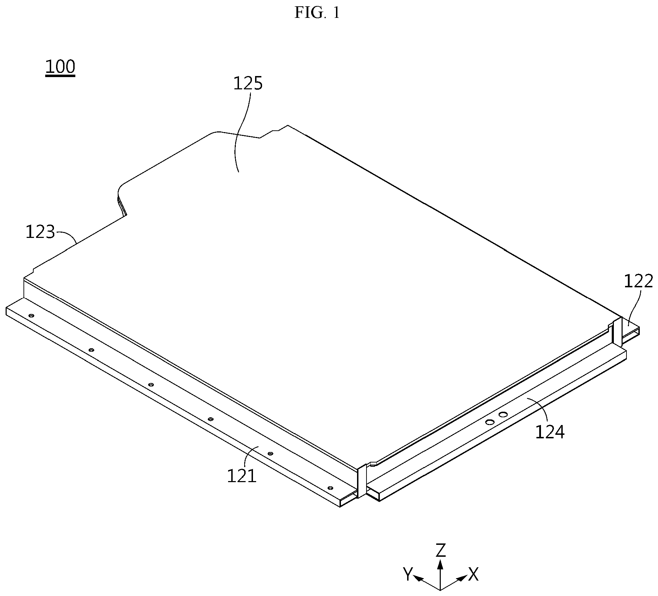

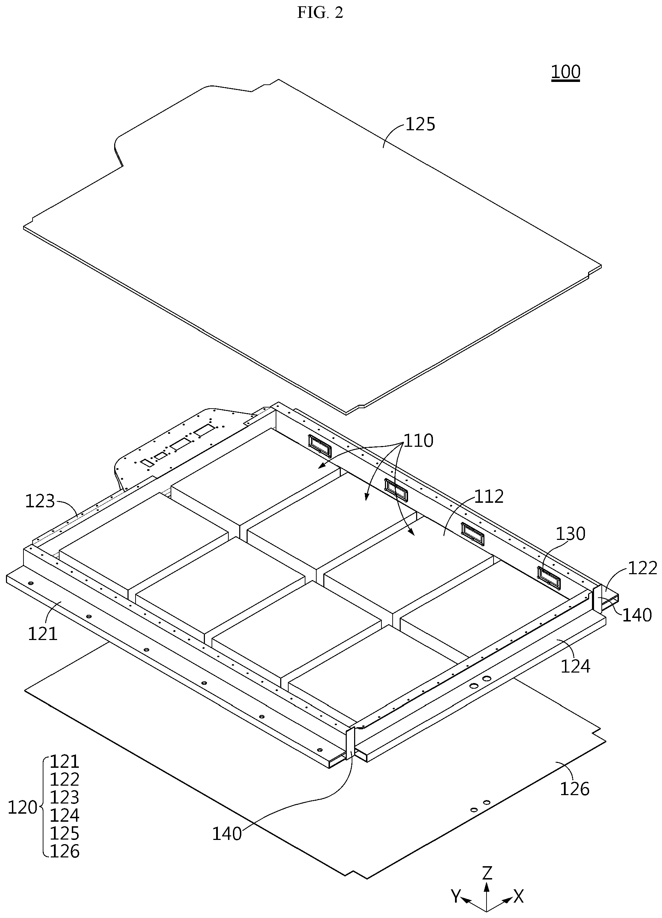

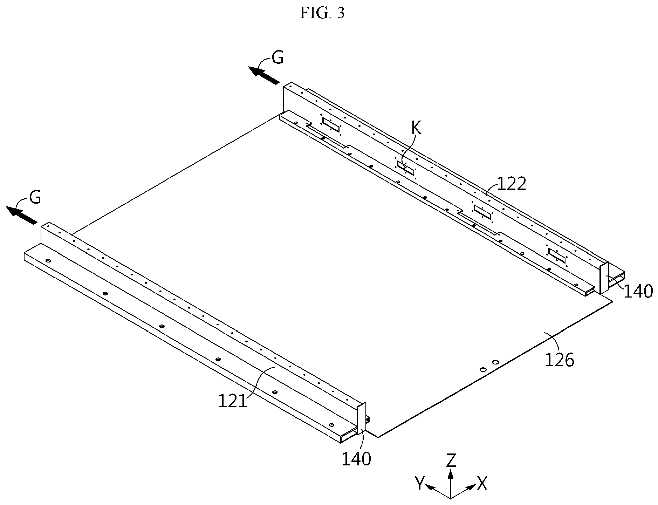

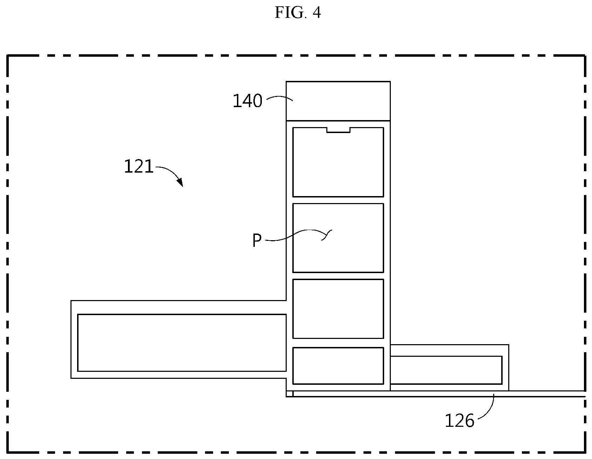

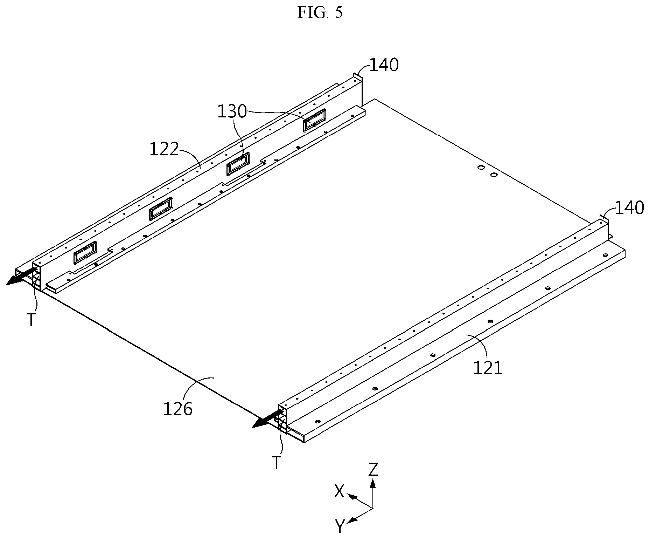

FIG. 1 is a perspective view schematically showing a battery pack according to an embodiment of the present disclosure. FIG. 2 is an exploded perspective view schematically showing the battery pack according to an embodiment of the present disclosure. FIG. 3 is a perspective view schematically showing some components of the battery pack according to an embodiment of the present disclosure. FIG. 4 is a partial rear view schematically showing some components of the battery pack according to an embodiment of the present disclosure. Also, FIG. 5 is a rear perspective view schematically showing some components of the battery pack according to an embodiment of the present disclosure.

Referring to FIGS. 1 to 5, a battery pack 100 according to an embodiment of the present disclosure includes at least one battery module 110, a pack housing 120 having an accommodation space formed to accommodate the at least one battery module 110, and a gas venting unit 130.

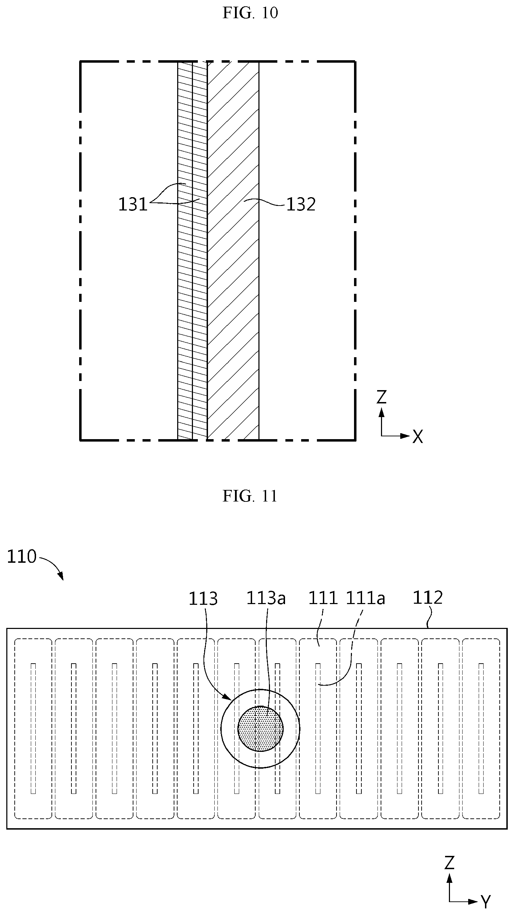

Specifically, the battery module 110 may include a plurality of battery cells 111 (see FIG. 11), and a module housing 112. Here, the battery cell may be, for example, a pouch-type battery cell having a high energy density and easy stacking. The battery cells may be accommodated inside the module housing 112 in a stacked form. The battery cell may include a positive electrode lead and a negative electrode lead. However, unlike this embodiment, the battery cell of the present disclosure is not necessarily limited to a pouch type, and a rectangular battery cell having a rectangular parallelepiped shape or cylindrical battery cell may be used.

In addition, although not shown in the drawings, electrode terminals 111a of the battery cells 111 may be electrically connected by a bus bar (not shown) including an electrically conductive metal. The bus bar may have a metal wire or metal plate shape. The bus bar may include any known common connection member configured to electrically connect the plurality of battery cells. This will not be described in detail here.

Moreover, the module housing 112 is a component used to accommodate the plurality of battery cells, and may be formed with a hermetic structure using a material having high mechanical strength to protect the plurality of battery cells from external physical and chemical factors.

In addition, the battery pack may include a plurality of battery modules 110. For example, as shown in FIG. 2, eight battery modules 110 may be accommodated in the pack housing 120. Each of the plurality of battery modules 110 may be coupled to the pack housing 120. Here, the coupling method is not limited to a specific coupling method, but a bolting method may be used.

In addition, the pack housing 120 is a component for forming a space for accommodating the battery modules 110, and includes side frames 121, 122, a base plate 126 coupled to lower portions of the side frames 121, 122, respectively, a top plate 125 coupled to upper portions of the side frames 121, 122, respectively, a front cover 124 forming a front wall of the pack housing 120, and a rear cover 123 forming a rear wall of the pack housing 120. For example, as shown in FIG. 2, the pack housing 120 includes a first side frame 121 located at a left side with respect to the base plate 126, and a second side frame 122 located at a right side. That is, the first side frame 121 is coupled to a left end of the base plate 126. The second side frame 122 may be coupled to a right end of the base plate 126.

Further, the pack housing 120 has a gas inlet K, a gas discharge channel P, and a gas outlet T.

The gas inlet K is configured so that the gas generated in the accommodation space may be introduced thereto. The gas inlet K is formed by opening a portion of the side frame 121. For example, four gas inlets K are formed in each of the side frames 121, 122. The gas inlet K is formed at a position facing the battery module 110 accommodated in the accommodation space.

In addition, the gas discharge channel P is configured to communicate with the gas inlet K. The gas discharge channel P is configured so that the gas introduced into the gas inlet K moves therethrough. The gas discharge channel P is formed to extend along the longitudinal direction of the side frame. For example, as in FIG. 4, the side frame may have four gas discharge channels P extending in the front and rear direction. In addition, the gas outlet T is formed at an end of the gas discharge channel P. For example, as shown in FIG. 5, the gas outlet T is formed at a rear end of each of the first side frame 121 and the second side frame 122. The gas outlet T is formed at the rear end of the gas discharge channel P.

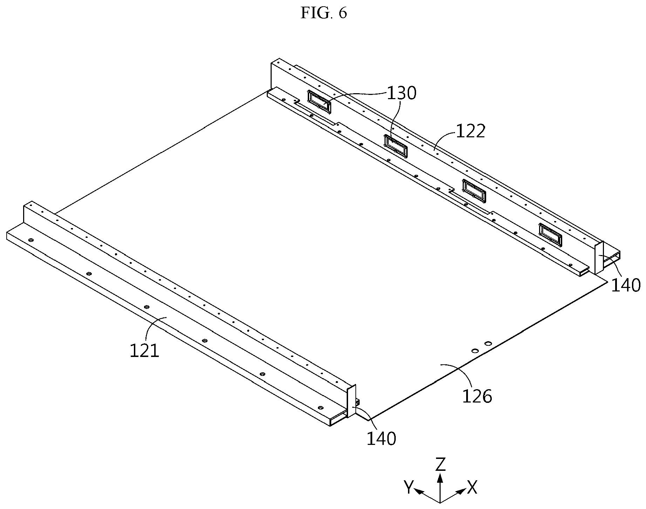

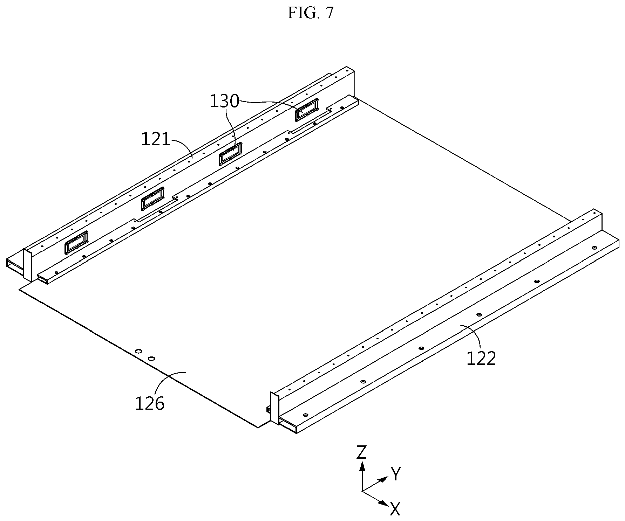

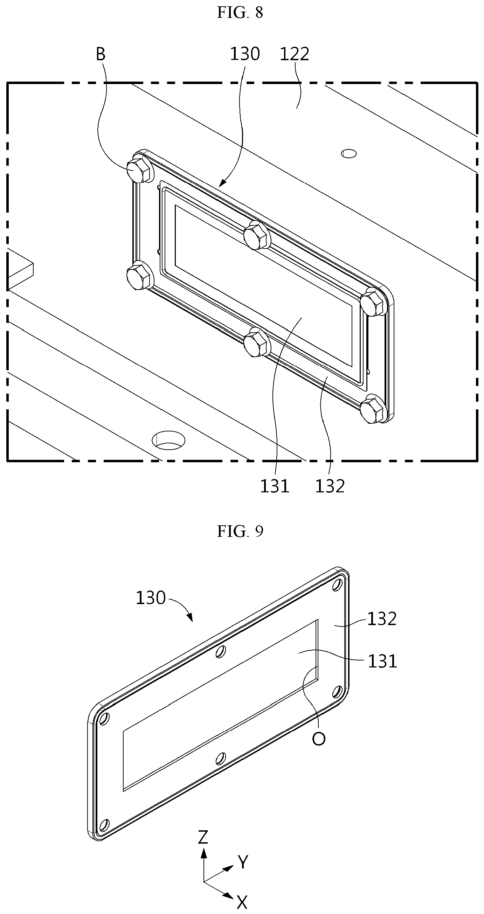

FIGS. 6 and 7 are a left perspective view and a right perspective view schematically showing some components of the battery pack according to an embodiment of the present disclosure. Also, FIG. 8 is a partial perspective view schematically showing a gas venting unit and a side frame of the battery pack according to an embodiment of the present disclosure.

Referring to FIGS. 2 and 5 again along with FIGS. 6 to 8, the gas venting unit 130 of the battery pack 100 according to an embodiment of the present disclosure is provided inside the accommodation space of the pack housing 120. The gas venting unit 130 has a plate shape as a whole. That is, the gas venting unit 130 is configured to seal the gas inlet K using the plate shape. The gas venting unit 130 has a plate shape with a size larger than that of the gas inlet K. The gas venting unit 130 is configured to be at least partially ruptured when the internal gas pressure of the pack housing 120 increases to a predetermined value or above. When being partially ruptured as above, the gas venting unit 130 is configured such that the gas in the accommodation space is introduced into the gas inlet K. That is, when the gas venting unit 130 is partially ruptured, the gas inlet K is opened. At this time, since the internal gas pressure of the pack housing 120 is greater than the external atmospheric pressure of the pack housing, the gas in the accommodation space of the pack housing 120 is introduced into the gas inlet K of the gas venting unit 130, and the gas introduced into the gas inlet K moves along the gas discharge channel P again, and the gas G is discharged to the outside of the battery pack 100 through the gas outlet T at the distal end of the gas discharge channel P.

In addition, the gas venting unit 130 includes a discharge disk 131 that has a plate shape and is at least partially ruptured when the internal gas pressure of the pack housing 120 increases to a predetermined value or above. In the following, the configuration of the discharge disk 131 will be described in more detail.

Therefore, according to this configuration of the present disclosure, since the battery pack of the present disclosure includes the gas venting unit 130 having a plate shape to seal the gas inlet K and configured to be at least partially ruptured when the internal gas pressure of the pack housing 120 increases to a predetermined value or above so that the gas in the accommodation space is introduced into the gas inlet K, when an abnormal operation such as a gas explosion of at least one battery module 110 accommodated in the battery pack 100 occurs, and thus when the internal gas pressure of the pack housing 120 increases to a predetermined value or above due to the gas discharged from the battery module 110, the gas venting unit 130 opens the gas inlet K so that the gas G is discharged to the outside quickly through the gas discharge channel P and the gas outlet T of the pack housing 120. Accordingly, the battery pack 100 of the present disclosure may greatly improve safety.

In addition, the side frame 121 may be configured to cover one side of at least one battery module 110. The side frame 121 may have a shape elongated in one direction. For example, as shown in FIG. 2, each of the first side frame 121 and the second side frame 122 may have a shape elongated in the front and rear direction.

Moreover, the side frame 121 may be formed at one side where the gas inlet K faces the battery module 110. For example, as shown in FIG. 5, four gas venting units 130 may be provided to the inner surface (right surface) of the first side frame 121. The four gas venting units 130 may be provided at positions facing four battery modules 110, respectively. As shown in FIG. 6, four gas venting units 130 may be provided to the inner surface (left surface) of the second side frame 122. The four gas venting units 130 may be provided at positions facing four battery modules 110, respectively.

In addition, the gas discharge channel P may be formed to be elongated in the one direction along the body of the side frame 121. For example, as shown in FIG. 3, the gas discharge channel P may have a shape extending from the front end to the rear end of each of the first side frame 121 and the second side frame 122.

Further, the gas outlet T may be formed at an end in the one direction that is the extension direction of the side frame 121 of the gas discharge channel P. For example, as in FIG. 5, the gas outlet T may be formed at the rear end of each of the first side frame 121 and the second side frame 122.

Therefore, according to this configuration of the present disclosure, since the battery pack 100 of the present disclosure includes the gas inlet K, the gas discharge channel P, and the gas outlet T formed at the side frame 121, it is possible to protect one side or the other side of the battery module 110 accommodated in the pack housing 120 from external impact through the side frame 121. Also, when the battery module 110 operates abnormally, it is possible to discharge the discharged gas to the outside of the battery pack 100 through the side frame 121. Accordingly, even if there is no separate gas discharge member in the battery pack 100 of the present disclosure, the internal gas may be discharged to the outside through the side frame 121 of the pack housing 120, so it is possible to reduce the manufacturing cost of the battery pack 100 by simplifying components of the battery pack 100 and to secure an accommodation space for the battery pack 100 more, so that the electric capacity per volume may be further increased.

Meanwhile, referring to FIGS. 1 to 7 again, the battery pack 100 of the present disclosure further includes a gas channel cap 140. The gas channel cap 140 is configured to seal an end of the gas discharge channel P. The gas channel cap 140 has a plate shape standing upright with respect to the bottom. That is, the gas channel cap 140 is provided at an end of the gas discharge channel P opposite to the gas outlet T. That is, when the gas channel cap 140 seals one end of the gas discharge channel P, the other end of the gas discharge channel P serves as the gas outlet T. The gas channel cap 140 prevents the gas moving through the gas discharge channel P from being discharged to the outside through the end of the gas discharge channel P opposite to the gas outlet T, other than the gas outlet T. For example, as shown in FIG. 3, the gas channel cap 140 may be provided at the front end of each of the first side frame 121 and the second side frame 122. The two gas channel caps 140 may be configured to seal the front end of the gas discharge channel P of each of the first side frame 121 and the second side frame 122.

Therefore, according to this configuration of the present disclosure, since the battery pack of the present disclosure further includes the gas channel cap 140 configured to seal the end of the gas discharge channel P opposite to the gas outlet T, it is possible to prevent the internal gas from being discharged through an unintended place other than the gas outlet T of the battery pack 100. Accordingly, the gas generated in the battery pack 100 of the present disclosure may be discharged through the intended place (gas outlet), so it is possible to prevent the gas discharged through the unintended place of the battery pack 100 from damaging other objects or people adjacent to the battery pack 100.

FIG. 8 is a partial perspective view schematically showing a gas venting unit and a side frame of the battery pack according to an embodiment of the present disclosure. Also, FIG. 9 is a rear perspective view schematically showing the gas venting unit of the battery pack according to an embodiment of the present disclosure.

Meanwhile, referring to FIGS. 8 and 9 along with FIGS. 2 and 3 again, the gas venting unit 130 of the battery pack 100 according to an embodiment of the present disclosure includes a discharge disk 131. The discharge disk 131 has a plate shape to cover the gas inlet K. The discharge disk 131 is configured to be at least partially ruptured when the internal gas pressure of the pack housing 120 increases to a predetermined value or above. The discharge disk 131 is fixed to the side frame 121 by a bolt. The discharge disk 131 has a thin plate shape. The discharge disk 131 has one surface parallel to the inner surface of the side frame 121. The discharge disk 131 has a size larger than that of the gas inlet K. The outer circumference of the discharge disk 131 is fixed to the periphery of the gas inlet K formed at the side frame 121. For example, as shown in FIG. 8, the discharge disk 131 is fixed to the inner surface of the side frame 121 using six bolts B.

**In** addition, the gas venting unit 130 may have a thin aluminum or plastic material. However, the material of the gas venting unit 130 is not necessarily limited thereto, and any material capable of being ruptured by a predetermined gas pressure inside the pack housing 120 may be used.

Moreover, the gas venting unit 130 further includes a coupling plate 132. The coupling plate 132 is coupled to the discharge disk 131. The coupling plate 132 has a partially opened shape so that a portion of the discharge disk 131 is exposed to the other side. That is, the opening O of the coupling plate 132 is configured such that at least a portion of the discharge disk 131 configured to be ruptured is exposed to the outside when the internal gas pressure of the pack housing 120 increases a predetermined value or above. That is, a portion of the discharge disk 131 is configured to be exposed through the opening O of the coupling plate 132. In addition, the opening O of the coupling plate 132 is configured to communicate with the gas inlet K. The coupling plate 132 is configured to support the discharge disk 131 to the inside where the battery module 110 is located. For example, as shown in FIG. 9, the coupling plate 132 is configured to support the outer surface of the discharge disk 131 in the inner direction (toward the battery module). In this case, the coupling plate 132 supports the outer circumference of the discharge disk 131 in the inner direction.

Therefore, according to this configuration of the present disclosure, since the gas venting unit 130 of the present disclosure further includes the coupling plate 132 coupled to the discharge disk 131 and partially opened so that a portion of the discharge disk 131 is exposed to the other side, when the internal gas pressure of the pack housing 120 increases to a predetermined value or above, it is possible to induce a portion of the discharge disk 131 exposed through the opening O of the coupling plate 132 to be ruptured with high reliability. Conversely, the unopened portion of the coupling plate 132 supports the discharge disk 131 in the inner direction. Thus, the portion of the discharge disk 131 supported by the coupling plate 132 is stably fixed, while the portion of the discharge disk 131 exposed to the outside through the opening O of the coupling plate 132 may be easily deformed by the gas pressure change caused by the generation of gas inside the pack housing 120. Accordingly, in the battery pack 100 of the present disclosure, when the internal gas pressure of the pack housing 120 increases to a predetermined value or above, the portion of the gas venting unit 130 exposed by the opening O may be reliably ruptured, so that the gas in the accommodation space may be introduced into the gas inlet K.

FIG. 10 is a cross-sectional view schematically showing a discharge disk and a coupling plate of the gas venting unit of the battery pack according to an embodiment of the present disclosure. Referring to FIG. 10 along with FIGS. 8 and 9 again, the gas venting unit 130 includes two or more discharge disks 131. The two or more discharge disks 131 are stacked on each other. The two discharge disks 131 are located to face the inner surface of the coupling plate 132. The gas venting unit 130 may change the number of the discharge disks 131 according to the set magnitude of the internal gas pressure of the pack housing 120 at which the gas is discharged. That is, when the discharge disk 131 of the gas venting unit 130 is designed to be ruptured at a relatively large internal gas pressure of the pack housing 120, the gas venting unit 130 may include a larger number of discharge disks 131. Conversely, when the discharge disk 131 of the gas venting unit 130 is designed to be ruptured at a relatively small internal gas pressure of the pack housing 120, the gas venting unit 130 may include a smaller number of discharge disks 131.

Therefore, according to this configuration of the present disclosure, in the gas venting unit 130 of the battery pack 100, the number of discharge disks 131 may be set according to the set magnitude of the internal gas pressure of the pack housing 120 at which the gas is discharged to the outside. Accordingly, in the present disclosure, when the gas pressure value for gas explosion is changed according to the capacity change of the battery pack 100, the gas discharge function may be provided with high reliability by changing the number of the discharge disks 131 without the need to manufacture a new gas venting unit 130. Ultimately, the present disclosure has an advantage in that the battery pack 100 with high safety may be manufactured at a low manufacturing cost.

FIG. 11 is a right view schematically showing a battery module of the battery pack according to an embodiment of the present disclosure.

Meanwhile, referring to FIG. 11 along with FIG. 2 again, the battery module 110 of the battery pack 100 according to an embodiment of the present disclosure may further include a module discharge unit 113. The module discharge unit 113 may be configured to discharge the gas inside the module housing 112 toward the gas venting unit 130 when the internal gas pressure of the module housing 112 increases to a predetermined value or above. The module discharge unit 113 may be located, for example, at one side of the battery module 110. For example, as shown in FIG. 11, the module discharge unit 113 may be located at the right side of the module housing 112 of the battery module 110. The module discharge unit 113 may be located to face the gas venting unit 130.

For example, the battery pack 100 shown in FIG. 2 includes eight battery modules 110. In this case, each of the four battery modules 110 disposed at the left side with respect to the center in the left and right direction of the battery pack 100 may include a module discharge unit 113 disposed at the left side of the module housing 112. In addition, each of the four battery modules 110 disposed at the right side may include a module discharge unit 113 located at the right side of the module housing 112.

In addition, the module discharge unit 113 may be configured such that, for example, a portion thereof forms an opening or a portion thereof is opened when the internal gas pressure of the module housing 112 increases a predetermined value or above. For example, the module discharge unit 113 may include a venting cap 113a that seals the opening formed in the module housing 112 and opens the opening when a pressure of a predetermined value or above is applied thereto. Here, the venting cap 113a may employ any known venting device that generally discharges gas to the outside by internal pressure. Accordingly, the venting cap 113a will not be described in detail.

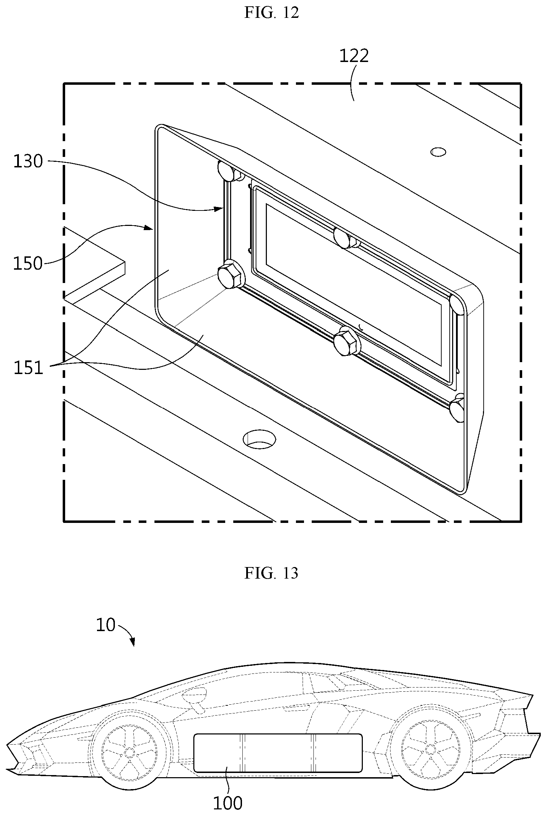

FIG. 12 is a partial perspective view showing some components of the battery pack according to another embodiment of the present disclosure.

Referring to FIG. 12 along with FIG. 2 again, the battery pack 100 according to another embodiment of the present disclosure may further include a guide member 150, when compared with the battery pack 100 of FIG. 2. Other components may be the same as those of the battery pack 100 of FIG. 2.

Specifically, the guide member 150 may be configured to guide the movement direction of the gas discharged from the battery module 110. The guide member 150 may be located at the outer circumference of the gas venting unit 130. The guide member 150 may guide the gas discharged from the battery module **110** to change the movement direction toward the gas venting unit 130. To this end, the guide member 150 may have a structure extending from the outer circumference of the gas venting unit 130. The extending structure of the guide member 150 may have a shape inclined outward from the outer circumference of the gas venting unit 130.

Therefore, according to this configuration of the present disclosure, since the battery pack of the present disclosure further includes the guide member 150 located at the outer circumference of the gas venting unit 130 to guide the movement direction of the gas discharged from the battery module 110, the gas discharged from the battery module 110 may be guided to move toward the gas venting unit 130. That is, the amount of gas discharged from the battery module 110 to the gas venting unit 130 without spreading to other places may be further increased. Accordingly, in the battery module 110 of the present disclosure, the gas venting unit 130 is opened with higher reliability, so that the generated high-temperature gas may be quickly discharged to the outside. Accordingly, it is possible to reduce the influence on other battery modules 110 of the battery pack 100, thereby preventing the occurrence of a secondary explosion or secondary thermal runaway.

Referring to FIG. 12 along with FIGS. 2 and 11 again, the guide member 150 may have a tube shape 151 extending toward the battery module 110. For example, as shown in FIG. 12, the guide member 150 may have a tube shape 151 extending from the outer circumference of the gas venting unit 130 toward the module discharge unit 113 of the battery module 110. The tube shape 151 of the guide member 150 may have a shape in which the tube diameter gradually toward the battery module 110. That is, the guide member 150 may have a tube shape 151 having a tapered structure that gradually spreads in the extending direction.

Therefore, according to this configuration of the present disclosure, since the guide member 150 has a tube shape 151 extending toward the battery module 110 so that the tube diameter of the tube shape 151 increases as being closer to the module discharge unit 113, it is possible to induce the gas discharged from the battery module 110 to move toward the gas venting unit 130. That is, the amount of gas discharged from the battery module 110 to the gas venting unit 130 without spreading to other places may be further increased. Accordingly, in the battery module 110 of the present disclosure, the gas venting unit 130 is opened with higher reliability, so the generated high-temperature gas may be quickly discharged to the outside. Accordingly, the battery pack 100 of the present disclosure may prevent the occurrence of a secondary explosion or secondary thermal runaway caused when the gas discharged from one battery module 110 is introduced into other battery modules 110.

FIG. 13 is a perspective view schematically showing a vehicle according to an embodiment of the present disclosure.

Referring to FIG. 13 along with FIG. 1, the vehicle 10 according to an embodiment of the present disclosure may include at least one battery pack 100 as above. The vehicle may include, for example, a vehicle body having an accommodation space for accommodating the battery pack 100 in which the at least one battery module is mounted. For example, the vehicle may be an electric vehicle, an electric scooter, an electric wheelchair or an electric bike.

Meanwhile, the terms indicating directions as used herein such as upper, lower, left, right, front and rear are used for convenience of description only, and it is obvious to those skilled in the art that the term may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the claims will become apparent to those skilled in the art from this detailed description.

## Claims

1. A battery pack (100), comprising:
at least one battery module (110);
a pack housing (120) having an accommodation space formed to accommodate the at least one battery module (110), and including a gas inlet (K) configured so that a gas generated in the accommodation space is introduced therein, a gas discharge channel (P) configured to communicate with the gas inlet (K) so that the introduced gas moves therethrough, and a gas outlet (T) formed at an end of the gas discharge channel (P); and
a gas venting unit (130) having a plate shape to seal the gas inlet (K) and configured to be at least partially ruptured when an internal gas pressure of the pack housing (120) increases to a predetermined value or above so that the gas in the accommodation space is introduced into the gas inlet (K),
wherein the pack housing (120) includes a side frame (121, 122) having a shape elongated in one direction to cover one side of the at least one battery module, and
wherein the side frame (121, 122) is configured so that:
the gas inlet (K) is formed at one surface of the side frame (121, 122) facing the battery module (110),
the gas discharge channel (P) is formed to be elongated in the one direction along a body of the side frame (121, 122), and
the gas outlet (T) is formed at an end of the side frame (121, 122) in the one direction,
**characterized in that** the gas venting unit (130) includes a discharge disk (131) having a plate shape to cover the gas inlet (K) and configured to be at least partially ruptured when the internal gas pressure of the pack housing (120) increases to the predetermined value or above,
wherein the gas venting unit (130) further includes a coupling plate (132) coupled to the discharge disk (131) and configured to be partially opened so that a portion of the discharge disk (131) is exposed to the other side, and
wherein the gas venting unit (130) includes at least two discharge disks (131), and
wherein the number of discharge disks (131) is set according to the set magnitude of an internal gas pressure of the pack housing at which the gas is discharged to the outside; and
the at least two discharge disks (131) are stacked on each other.

2. The battery pack (100) according to claim 1,
wherein the side frame (121, 122) further includes a gas channel cap (140) having a plate shape and configured to seal an end of the gas discharge channel (P) opposite to the gas outlet (T).

3. The battery pack (100) according to claim 1,
wherein the battery module (110) includes:
at least one battery cell (111);
a module housing (112) configured to accommodate the battery cell (111) therein; and
a module discharge unit (113) configured to discharge a gas inside the module housing (112) toward the gas venting unit (130) when an internal gas pressure of the module housing (112) increases to a predetermined value or above,
wherein the module discharge unit (113) is provided at one side of the module housing (112), and
wherein the module discharge unit (113) is located to face the gas venting unit (130).

4. The battery pack (100) according to claim **1,** further comprising:
a guide member (150) located at an outer circumference of the gas venting unit (130) to guide a movement direction of the gas discharged from the battery module (110).

5. The battery pack (100) according to claim 4,
wherein the guide member (150) has a tube shape (151) extending toward the battery module (110), and a tube diameter of the tube shape (151) increases as being closer to the battery module (110).

6. A vehicle (10) comprising the battery pack (100) according to any one of claims 1 to 5.

## Patentansprüche

1. Ein Akkupack (100), umfassend:
mindestens ein Batteriemodul (110);
ein Packgehäuse (120), das einen Aufnahmeraum aufweist, der zur Aufnahme des mindestens einen Batteriemoduls (110) ausgebildet ist, und einen Gaseinlass (K), der so konfiguriert ist, dass ein im Aufnahmeraum erzeugtes Gas darin eingeleitet wird, einen Gasauslasskanal (P), der so konfiguriert ist, dass er mit dem Gaseinlass (K) in Verbindung steht, so dass sich das eingeleitete Gas durch ihn hindurchbewegt, und einen Gasauslass (T), der an einem Ende des Gasauslasskanals (P) ausgebildet ist; und
eine Gasentlüftungseinheit (130), die eine Plattenform aufweist, um den Gaseinlass (K) abzudichten, und so konfiguriert ist, dass sie zumindest teilweise aufbricht, wenn ein interner Gasdruck des Packgehäuses (120) auf einen vorbestimmten Wert oder darüber ansteigt, so dass das Gas im Aufnahmeraum in den Gaseinlass (K) eingeleitet wird,
wobei das Packgehäuse (120) einen Seitenrahmen (121, 122) aufweist, der eine in einer Richtung längliche Form hat, um eine Seite des mindestens einen Batteriemoduls abzudecken, und
wobei der Seitenrahmen (121, 122) so konfiguriert ist, dass:
der Gaseinlass (K) an einer Oberfläche des Seitenrahmens (121, 122) ausgebildet ist, die dem Batteriemodul (110) zugewandt ist,
der Gasauslasskanal (P) so ausgebildet ist, dass er in der einen Richtung entlang eines Körpers des Seitenrahmens (121, 122) länglich ist, und
der Gasauslass (T) an einem Ende des Seitenrahmens (121, 122) in der einen Richtung ausgebildet ist,
**dadurch gekennzeichnet, dass** die Gasentlüftungseinheit (130) eine Auslassscheibe (131) enthält, die eine Plattenform aufweist, um den Gaseinlass (K) abzudecken, und so konfiguriert ist, dass sie zumindest teilweise aufbricht, wenn der interne Gasdruck des Packgehäuses (120) auf den vorbestimmten Wert oder darüber ansteigt,
wobei die Gasentlüftungseinheit (130) ferner eine Kopplungsplatte (132) enthält, die mit der Auslassscheibe (131) gekoppelt und so konfiguriert ist, dass sie teilweise geöffnet ist, so dass ein Teil der Auslassscheibe (131) zur anderen Seite hin freiliegt, und
wobei die Gasentlüftungseinheit (130) mindestens zwei Auslassscheiben (131) enthält, und
wobei die Anzahl der Auslassscheiben (131) entsprechend der eingestellten Größe eines internen Gasdrucks des Packgehäuses eingestellt ist, bei dem das Gas nach außen abgeleitet wird; und
die mindestens zwei Auslassscheiben (131) aufeinander gestapelt sind.

2. Der Akkupack (100) nach Anspruch 1,
wobei der Seitenrahmen (121, 122) ferner eine Gaskanalkappe (140) aufweist, die eine Plattenform hat und so konfiguriert ist, dass sie ein dem Gasauslass (T) gegenüberliegendes Ende des Gasauslasskanals (P) abdichtet.

3. Der Akkupack (100) nach Anspruch 1,
wobei das Batteriemodul (110) enthält:
mindestens eine Batteriezelle (111);
ein Modulgehäuse (112), das so konfiguriert ist, dass es die Batteriezelle (111) darin aufnimmt; und
eine Modulauslasseinheit (113), die so konfiguriert ist, dass sie ein Gas innerhalb des Modulgehäuses (112) in Richtung der Gasentlüftungseinheit (130) ableitet, wenn ein interner Gasdruck des Modulgehäuses (112) auf einen vorbestimmten Wert oder darüber ansteigt,
wobei die Modulauslasseinheit (113) an einer Seite des Modulgehäuses (112) vorgesehen ist, und
wobei die Modulauslasseinheit (113) so angeordnet ist, dass sie der Gasentlüftungseinheit (130) zugewandt ist.

4. Der Akkupack (100) nach Anspruch 1, ferner umfassend:
ein Führungselement (150), das an einem Außenumfang der Gasentlüftungseinheit (130) angeordnet ist, um eine Bewegungsrichtung des vom Batteriemodul (110) ausgestoßenen Gases zu steuern.

5. Der Akkupack (100) nach Anspruch 4,
wobei das Führungselement (150) eine Rohrform (151) aufweist, die sich in Richtung des Batteriemoduls (110) erstreckt, und ein Rohrdurchmesser der Rohrform (151) mit zunehmender Nähe zum Batteriemodul (110) zunimmt.

6. Ein Fahrzeug (10), umfassend den Akkupack (100) nach einem der Ansprüche 1 bis 5.

## Revendications

1. Un bloc-batterie (100), comprenant :
au moins un module de batterie (110) ;
un boîtier de bloc (120) ayant un espace de logement formé pour loger l'au moins un module de batterie (110), et incluant une entrée de gaz (K) configurée pour qu'un gaz généré dans l'espace de logement y soit introduit, un canal d'évacuation de gaz (P) configuré pour communiquer avec l'entrée de gaz (K) de sorte que le gaz introduit se déplace à travers celui-ci, et une sortie de gaz (T) formée à une extrémité du canal d'évacuation de gaz (P) ; et
une unité d'évacuation de gaz (130) ayant une forme de plaque pour sceller l'entrée de gaz (K) et configurée pour être au moins partiellement rompue lorsqu'une pression de gaz interne du boîtier de bloc (120) augmente jusqu'à une valeur prédéterminée ou plus, de sorte que le gaz dans l'espace de logement est introduit dans l'entrée de gaz (K),
dans lequel le boîtier de bloc (120) inclut un cadre latéral (121, 122) ayant une forme allongée dans une direction pour couvrir un côté de l'au moins un module de batterie, et
dans lequel le cadre latéral (121, 122) est configuré de sorte que :
l'entrée de gaz (K) est formée sur une surface du cadre latéral (121, 122) faisant face au module de batterie (110),
le canal d'évacuation de gaz (P) est formé pour être allongé dans ladite une direction le long d'un corps du cadre latéral (121, 122), et
la sortie de gaz (T) est formée à une extrémité du cadre latéral (121, 122) dans ladite une direction,
**caractérisé en ce que** l'unité d'évacuation de gaz (130) inclut un disque d'évacuation (131) ayant une forme de plaque pour couvrir l'entrée de gaz (K) et configuré pour être au moins partiellement rompu lorsque la pression de gaz interne du boîtier de bloc (120) augmente jusqu'à la valeur prédéterminée ou plus,
dans lequel l'unité d'évacuation de gaz (130) inclut en outre une plaque de couplage (132) couplée au disque d'évacuation (131) et configurée pour être partiellement ouverte de sorte qu'une partie du disque d'évacuation (131) est exposée de l'autre côté, et
dans lequel l'unité d'évacuation de gaz (130) inclut au moins deux disques d'évacuation (131), et dans lequel le nombre de disques d'évacuation (131) est défini selon la grandeur définie d'une pression de gaz interne du boîtier de bloc à laquelle le gaz est évacué vers l'extérieur ; et
les au moins deux disques d'évacuation (131) sont empilés l'un sur l'autre.

2. Le bloc-batterie (100) selon la revendication 1,
dans lequel le cadre latéral (121, 122) inclut en outre un capuchon de canal de gaz (140) ayant une forme de plaque et configuré pour sceller une extrémité du canal d'évacuation de gaz (P) opposée à la sortie de gaz (T).

3. Le bloc-batterie (100) selon la revendication 1,
dans lequel le module de batterie (110) inclut :
au moins une cellule de batterie (111) ;
un boîtier de module (112) configuré pour loger la cellule de batterie (111) à l'intérieur de celui-ci ; et
une unité d'évacuation de module (113) configurée pour évacuer un gaz à l'intérieur du boîtier de module (112) vers l'unité d'évacuation de gaz (130) lorsqu'une pression de gaz interne du boîtier de module (112) augmente jusqu'à une valeur prédéterminée ou plus,
dans lequel l'unité d'évacuation de module (113) est prévue sur un côté du boîtier de module (112), et
dans lequel l'unité d'évacuation de module (113) est située pour faire face à l'unité d'évacuation de gaz (130).

4. Le bloc-batterie (100) selon la revendication 1, comprenant en outre :
un élément de guidage (150) situé à une circonférence extérieure de l'unité d'évacuation de gaz (130) pour guider une direction de mouvement du gaz évacué du module de batterie (110).

5. Le bloc-batterie (100) selon la revendication 4,
dans lequel l'élément de guidage (150) a une forme de tube (151) s'étendant vers le module de batterie (110), et un diamètre de tube de la forme de tube (151) augmente en se rapprochant du module de batterie (110).

6. Un véhicule (10) comprenant le bloc-batterie (100) selon l'une quelconque des revendications 1 à 5.
